Europäisches Patentamt

**European Patent Office**

**Office européen des brevets**

(11) Veröffentlichungsnummer: **0 198 318**
**B1**

(12) **EUROPÄISCHE PATENTSCHRIFT**

(45) Veröffentlichungstag der Patentschrift:
**12.07.89**

(21) Anmeldenummer: **86104435.2**

(22) Anmeldetag: **01.04.86**

(51) Int. Cl.⁴: **G11B 5/41**, G11B 23/04

(54) **Anordnung zum Reinigen eines Magnetkopfs in einem Magnetbandgerät.**

(30) Priorität: **02.04.85 DE 3512049**
**24.10.85 DE 3537895**

(43) Veröffentlichungstag der Anmeldung:
**22.10.86 Patentblatt 86/43**

(45) Bekanntmachung des Hinweises auf die Patenterteilung:
**12.07.89 Patentblatt 89/28**

(84) Benannte Vertragsstaaten:
**DE GB**

(56) Entgegenhaltungen:
**DE-A- 3 300 418**
**FR-A- 2 519 457**
**US-A- 4 272 796**

**PATENTS ABSTRACTS OF JAPAN, Band 1, Nr. 81, 28.**
**Juli 1977, Seite 1600 E 77; & JP - A - 52 18 306**
**PATENTS ABSTRACTS OF JAPAN, Band 7,**
**Nr. 202 (P-221)[1347], 07. September 1983,**
**Seite 142 P 221; & JP - A - 58 100 254**

(73) Patentinhaber: **TANDBERG DATA A/S,**
**Kjelsasveien 161 Postboks 9 Korsvoll,**
**N-0808 Oslo 8(NO)**

(72) Erfinder: **Rudi, Guttorm, Edvard-Grieg-Sv. 17,**
**N-01472 Fjellhamar(NO)**

(74) Vertreter: **Mehl, Ernst, Dipl.-Ing. et al, Postfach 22 13 17,**
**D-8000 München 22(DE)**

## Beschreibung

Die Erfindung bezieht sich auf eine Anordnung zum Reinigen eines Magnetkopfs in einem Magnetbandgerät gemäß dem Oberbegriff des Patentanspruchs 1 oder des Patentanspruches 2.

Es ist bereits allgemein bekannt, zum Reinigen eines Magnetkopfs in einem Magnetbandgerät eine Kassette zu verwenden, die anstelle einer mit einem Magnetband versehenen Kassette in das Magnetbandgerät eingesetzt wird. Anstelle des Magnetbands enthalten diese Kassetten ein Reinigungsband mit einer rauhen Oberfläche und das Reinigungsband wird in gleicher Weise wie das Magnetband mittels der Bandantriebsrolle, die auch als Capstan bezeichnet wird und/oder über die Bandwickel angetrieben.

Bei der Verwendung einer derartigen Kassette erfolgt somit die Reinigung in Laufrichtung des Magnetbands. Bei häufigem Betrieb des Magnetbandgeräts besteht jedoch die Gefahr, daß sich durch das Magnetband Einschliffe auf dem Magnetkopf bilden, die zu leichten Vertiefungen an der Frontseite des Magnetkopfs im Bereich des Magnetbands führen können. Da die Reinigungsbänder eine rauhe Oberfläche aufweisen, werden diese Vertiefungen durch das Reinigungsband noch verstärkt.

Aus der US-PS 4,272,796 ist eine Anordnung zum Reinigen eines Magnetkopfs in einem Magnetbandgerät bekannt, bei dem in einer Kassette eine Reinigungseinrichtung vorgesehen ist. Die Reinigungseinrichtung besteht aus einer Exzenteranordnung, die durch diejenige Antriebsanordnung des Magnetbandgeräts angetrieben wird, die eine Bandspule antreibt. Ein Reinigungselement führt eine Hin- und Herbewegung in der Bewegungsrichtung des Magnetbands durch. In einer weiteren Ausführungsform ist auf einem Antriebsrad ein Keil vorgesehen, der eine Bewegung des Reinigungselements senkrecht zur Bewegungsrichtung des Magnetbands durchführt.

Eine weitere Anordnung zum Reinigen eines Magnetkopfs in einem Magnetbandgerät ist aus der japanischen Patentanmeldung 50-93774 (Kokai Nr. 52-18306) bekannt. Auch dort wird ein an einem Hebel angeordnetes Reinigungselement in einer Kassette durch ein Antriebsrad angetrieben und senkrecht zur Bewegungsrichtung des Magnetbandes bewegt. Das Antriebsrad weist an seinem Umfang eine wellenförmige Vertiefung auf.

Der Erfindung liegt die Aufgabe zugrunde, eine weitere Anordnung zum Reinigen eines Magnetkopfs in einem Magnetbandgerät anzugeben, die eine zuverlässige Reinigung des Magnetkopfs gewährleistet und die dennoch einen verhältnismäßig geringen Aufwand erfordert.

Erfindungsgemäß wird die Aufgabe bei der Anordnung der eingangs genannten Art durch die im kennzeichnenden Teil der Patentansprüche 1 und 2 angegebenen Merkmale gelöst.

Die Kassette gemäß der Erfindung hat den Vorteil, daß sie vielseitig verwendbar ist und sehr gute Reinigungseigenschaften aufweist, da das Reinigungselement eine von der Laufrichtung des Magnetbands verschiedene Hin- und Herbewegung relativ zum Magnetkopf durchführt. Damit werden auch Ablagerungen auf dem Magnetkopf erfasst, die sich hinter Unebenheiten des Magnetkopfs ablagern. Außerdem wird die Ausbildung von Vertiefungen in dem Bereich des Magnetbands beim Reinigen des Magnetkopfs nicht zusätzlich gefördert.

Besonders gute Reinigungseigenschaften der Anordnung werden erreicht, wenn anstelle der Hin- und Herbewegung des Reinigungselements senkrecht zur Bewegungsrichtung des Magnetbands oder zusätzlich zu dieser Hin- und Herbewegung eine Schwenkbewegung des Reinigungselements durchgeführt wird. Diese Schwenkbewegung kann auch als eine teilweise Drehbewegung oder eine Schwingbewegung in der Ebene des Magnetbands aufgefaßt werden.

Bei einer bevorzugten Ausführungsform der Erfindung wird die Exzenterwelle über ein Schneckengetriebe und ein Antriebsrad angetrieben und von einem mit dem Reinigungselement versehenen Träger mindestens teilweise unfaßt.

Die Schwenkbewegung des Reinigungselements wird dadurch erreicht, daß die Exzenterwelle geneigt ausgebildet ist. Beispielsweise können die Enden der Exzenterwelle um einen Winkel von ca. 60° gegeneinander verdreht sein.

Das Schneckengetriebe wird vorzugsweise aus einer von dem Antriebsrad angetriebenen Schnecke und aus einem auf einer Welle der Exzenteranordnung angeordneten Schneckenrad gebildet. Das Antriebsrad kann dabei von der normalerweise ein Magnetband bewegenden Bandantriebsrolle oder von einer eine Spule mit dem Magnetband drehenden Antriebsanordnung des Magnetbandgeräts angetrieben werden. Im ersteren Fall ist das Antriebsrad zweckmäßigerweise als Reibrad ausgebildet.

Um die Reinigungseinrichtung in einer Kassette unterzubringen, ist es günstig, wenn das Antriebsrad mit einer Schnecke des Schneckengetriebes unmittelbar verbunden ist und eine Vertiefung für ein zugehöriges Schneckenrad aufweist.

Die Lagerung des mit dem Reinigungselement versehenen Trägers erfolgt in vorteilhafter Weise unter Verwendung eines mit dem Träger verbundenen kugelförmigen Teils, das auf einer mit der Kassette verbundenen entsprechenen Kugelpfanne aufliegt und das an dem dem Reinigungselement gegenüberliegenden Ende der Kassette angeordnet ist.

Zusätzlich zu der Hin- und Herbewegung senkrecht zur Bewegungsrichtung des Magnetbands und gegebenenfalls zusätzlich zur Schwenkbewegung kann auch eine Bewegung des Reinigungselements in Richtung des Magnetbands durchgeführt werden. Falls dies nicht gewünscht ist, wird zweckmäßigerweise ein Führungsstift vorgesehen, der über eine entsprechende Ausnehmung den Träger während seiner Hin- und Herbewegung senkrecht zur Bewegungsrichtung des Magnetbands oder während seiner Schwenkbewegung führt.

Das Reinigungselement ist zweckmäßigerweise auswechselbar ausgebildet. Zu diesem Zweck enthält die Kassette in ihrem Deckel eine zusätzliche Öffnung. Das Reinigungselement ist auf einem Streifen angeordnet. Dieser Streifen kann dehnbar ausgebildet sein und gemeinsam mit dem Reinigungselement ausgewechselt werden. Es erweist sich jedoch als vorteilhaft, das Reinigungselement auf einem Streifen anzuordnen, der schwenkbar und verrastbar an dem Trägerteil befestigt ist. Das Reinigungselement ist vorzugsweise mit einer Längsöffnung versehen, mittels der es auswechselbar auf den Streifen aufschiebbar ist. Das Reinigungselement kann auf diese Weise sehr einfach ausgewechselt werden und kann beispielsweise nach einer vorgegebenen Zeitdauer umgedreht werden, so daß auch die Rückseite für die Reinigung verwendet werden kann.

Der Streifen ist für das Auswechseln vorzugsweise an seinem einen Ende mit einem Gelenk versehen, das am Träger befestigt ist und an seinem anderen Ende mit einer Rastnase versehen, die im Träger verrastbar ist. Wenn der Träger aus Kunststoff ausgebildet ist, ist das Gelenk vorzugsweise als Filmscharnier ausgebildet.

Eine besonders vorteilhafte Reinigungswirkung ergibt sich, wenn das Reinigungselement nicht parallel sondern geneigt zur Vorderkante der Kassette angeordnet ist.

Ein Ausführungsbeispiel der Anordnung gemäß der Erfindung wird im folgenden anhand von Zeichnungen näher erläutert. Es zeigen

Fig. 1 eine Darstellung einer teilweise aufgebrochenen perspektivischen Ansicht einer mit einer ersten Ausführungsform der Anordnung versehenen Kassette,

Fig. 2 eine Darstellung einer teilweise aufgebrochenen perspektivischen Ansicht einer mit einer zweiten Ausführungsform der Anordnung versehenen Kassette,

Fig. 3 eine detaillierte Darstellung einer teilweise aufgebrochenen Draufsicht auf die Kassette mit der zweiten Ausführungsform,

Fig. 4 eine Darstellung einer Exzenteranordnung,

Fig. 5 ein Schnittbild eines Trägers und

Fig. 6 eine teilweise geschnittene Darstellung eines Antriebsrads.

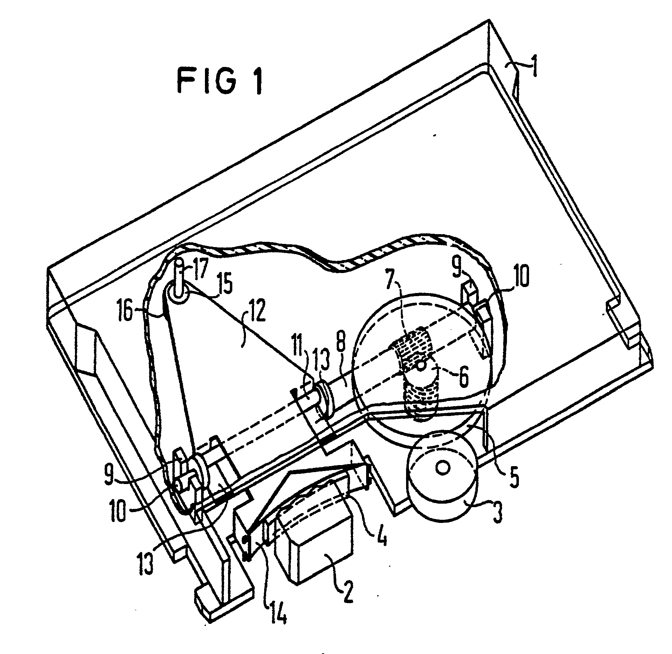

Die in Fig. 1 dargestellte Kassette 1 einer ersten Ausführungsform der Erfindung weist äußere Abmessungen auf, die denen einer im Handel erhältlichen mit Magnetband versehenen Kassette, die auch unter der Bezeichnung 1/4-Inch Cartridge bekannt ist, weitgehend entsprechen. Nach dem Einführen der Kassette 1 in ein entsprechendes Magnetbandgerät mit einem Magnetkopf 2 und einer normalerweise für den Antrieb des Magnetbands vorgesehenen Bandantriebsrolle 3 liegt an der Frontseite des Magnetkopfs 2 ein Reinigungselement 4 einer in der Kassette enthaltenen Reinigungseinrichtung an. Außerdem liegt an der Bandantriebsrolle 3 ein Antriebsrad 5 der Kassette 1 an. Das Antriebsrad 5 ist beispielsweise als Reibrad ausgebildet und enthält an seinem Umfang eine Beschichtung aus Gummi. Auf der Achse des Antriebsrads 5 ist eine Schnecke 6 angeordnet, die beispielsweise mit dem Antriebsrad 5 eine Baueinheit bildet. Die Schnecke 6 ist Teil eines Schnekkengetriebes und ist einem Schneckenrad 7 zugeordnet, das auf einer Exzenteranordnung 8 angeordnet ist. Die Exzenteranordnung 8 wird aus einer in zwei Lagern 9 gelagerten Welle 10, auf der auch das Schneckenrad 7 angeordnet ist und einer Exzenterwelle 11 gebildet.

Die Exzenterwelle 11 wird von einem Träger 12 einerseits durch seine Tragefläche und andererseits durch eine Lippe 13 umfaßt. An dem Träger 12 ist an seiner Frontseite das Reinigungselement 4 angeordnet, das beispielsweise filzartig und kissenförmig ausgebildet ist und mit einer Reinigungsflüssigkeit getränkt werden kann. Das Reinigungselement 4 ist auf einem vorzugsweise dehnbaren Streifen 14 angeordnet und kann beispielsweise zusammen mit diesem ausgewechselt werden. Zu diesem Zweck weist der Deckel der Kassette 1 in dem entsprechenden Bereich an seiner Oberseite eine Öffnung auf. Der rückwärtige Teil des Trägers 11 ist an der Kassette beweglich gelagert und zwar mittels eines kugelförmigen Teils 15, das in einer entsprechenden mit der Grundplatte der Kassette 1 verbundenen Kugelpfanne 16 beweglich gelagert ist und das mittels eines am Deckel der Kassette 1 angeordneten Stifts 17 in der Kugelpfanne 16 gehalten wird.

Bei einer Drehbewegung der Bandantriebsrolle 3 in einer der beiden Drehrichtungen werden das Antriebsrad 5 und die Schnecke 6 ebenfalls in Drehung versetzt. Durch das aus der Schnecke 6 und dem Schneckenrad 7 gebildete Schneckengetriebe wird die Drehbewegung auf die Exzenteranordnung 8 übertragen und durch die Exzenterwelle 11, die von dem Träger 12 umfaßt wird, führt der Träger 12 eine Hin- und Herbewegung senkrecht zur Bewegungsrichtung des Magnetbands relativ zum Magnetkopf 2 durch, um diesen zu reinigen. Zusätzlich kann, falls der Magnetkopf 2 positionierbar ausgebildet ist, ebenfalls eine Bewegung, vorzugsweise eine langsame Bewegung des Magnetkopfs 2 senkrecht zur Bewegungsrichtung des Magnetbands durchgeführt werden. Das Reinigungselement 4 drückt dabei leicht gegen den Magnetkopf 2 und es kann zum Reinigen mit der Reinigungsflüssigkeit getränkt sein.

Es ist auch möglich, die Reinigungseinrichtung durch eine Antriebsanordnung des Magnetbandgeräts anzutreiben, die normalerweise zum Antreiben eines oder beider Wickel des Magnetbands in der Kassette vorgesehen ist. Weiterhin ist es möglich, zusätzlich zur Hin- und Herbewegung senkrecht zur Bewegungsrichtung des Magnetbandes eine Hin- und Herbewegung auch in der Bewegunggsrichtung dem Magnetbandes durchzuführen.

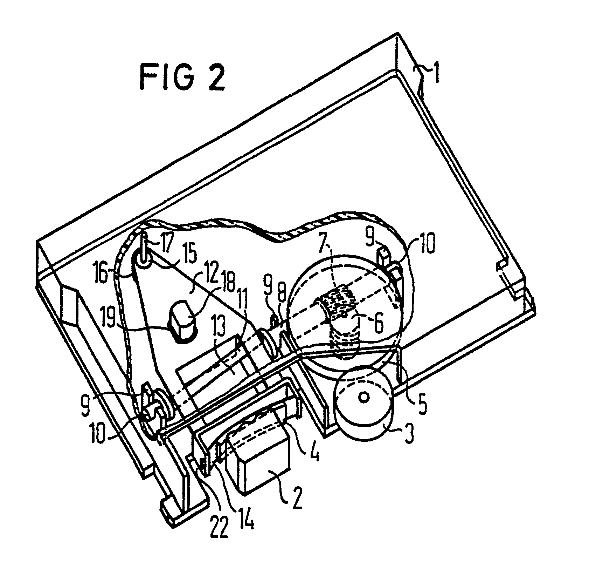

Die in Fig. 2 dargestellte zweite Ausführungsform der Anordnung stimmt weitgehend mit der ersten Ausführungsform überein. Ein wesentlicher Unterschied besteht jedoch darin, daß die Exzenterwelle 11 nicht parallel zur Welle 10 angeordnet ist, sondern gegen diese geneigt angeordnet ist. Beispielsweise sind die Enden der Exzenterwelle 11 gegeneinander in einem Bereich von 45° bis 75°, vorzugsweise um 60° verdreht. Weitere Unterschiede zur der ersten Ausführungsform bestehen auch darin, daß ein weiteres Lager 9 vorgesehen ist, daß der Träger 12 eine Öffnung 19 aufweist, durch die ein Führungsstift 18 senkrecht zum Boden der Kassette hindurchragt. Dieser Führungsstift 18 führt den Träger 12 während seiner Schwingbewegung und gegebenenfalls seiner Hin- und Herbewegung und die Öffnung 19 ist derart ausgebildet, daß diese Bewegungen möglich sind. Schließlich unterscheidet sich die zweite Ausführungsform auch dadurch, daß der Streifen 14 mit dem Reinigungselement 4 herausklappbar ausgebildet ist, um das Reinigungselement austauschen zu können, wenn dieses auf den Streifen 14 aufsteckbar ausgebildet ist.

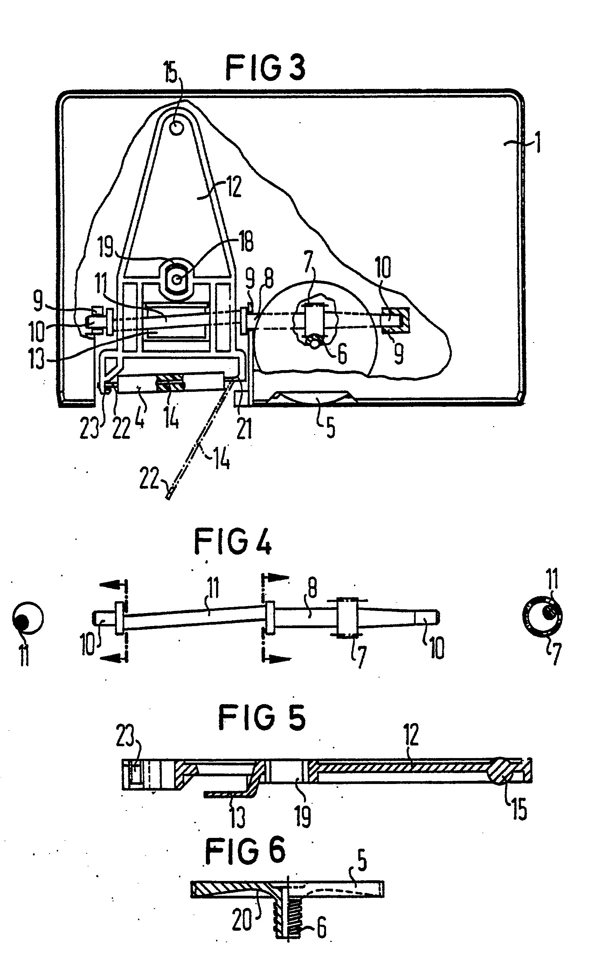

Bei der in Fig. 3 dargestellten Draufsicht auf die Kassette 1 nach der zweiten Ausführungsform ist die Exzenteranordnung 8 dargestellt, die aus der Welle 10, dem Schneckenrad 7 und der Exzenterwelle 11 besteht. Die Exzenteranordnung 8 ist in drei Lagern 9 drehbar gelagert und sie wird über das Antriebsrad 5 und die mit diesem verbundene Schnecke 6 über das Schneckenrad 7 angetrieben. Die Exzenterwell 11 ist gegen die Achse der Welle 10 geneigt angeordnet und bei der Drehung der Exzenteranordnung 8 wird der Träger 12 in die Hin- und Herbewegung und gleichzeitig in die Schwingbewegung, die auch als eine Schwenkbewegung oder teilweise Drehbewegung aufgefaßt werden kann, versetzt. Der Träger 12 ist an seinem hinteren Ende durch das kugelförmige Teil 15 gelagert und umgreift die Exzenterwelle 11 auf der einen Seite, beispielsweise der Oberseite durch seitliche Auflageflächen und auf der anderen Seite, beispielsweise der Unterseite durch die Lippe 13. An der Vorderseite des Trägers ist der schwenkbare Streifen 14 zu erkennen, der über ein Gelenk 21 am Träger 12 befestigt ist. Wenn der Träger aus Kunststoff ausgebildet ist, ist das Gelenk beispielsweise als Filmscharnier ausgebildet. Der Streifen 14 weist an seinem anderen Ende eine Rastnase 22 auf, die in eine entsprechende Öffnung 23 des Trägers einschiebbar ist, wenn der Streifen 14 in seiner Betriebsstellung ist. Über den Streifen 14 wird das Reinigungselement geschoben, das eine entsprechende Längsöffnung aufweist. Das Reinigungselement 4 ist auswechselbar auf dem Streifen 14 befestigt und kann, wenn dieser herausgeklappt ist, einfach ausgetauscht oder gedreht werden, so daß es von beiden Seiten benutzt werden kann. Das Reinigungselement 4 ist kissen- oder filzartig aufgebaut und kann mit der Reinigungsflüssigkeit getränkt werden.

Bei der Darstellung in Fig. 4 ist die Exzenteranordnung 8 als Einzelteil dargestellt. Sie besteht, wie bereits erwähnt, aus der Welle 10, dem Schneckenrad 7 und der Exzenterwelle 11. Zu beiden Seiten der Darstellung sind Schnittbilder längs der Linien A-A und B-B dargestellt, aus denen hervorgeht, daß die Enden der Exzenterwelle 11 gegeneinander um einen Winkel von beispielsweise 60° verdreht sind.

Bei dem in Fig. 5 dargestellten Schnittbild durch den Träger 12 ist an dessen rückwärtigem Ende das kugelförmige Teil 15 zu erkennen. Weiterhin sind die Ausnehmung 19 für den Führungsstift 18 und die Lippe 11 zu erkennen, die die Exzenterwelle 11 von unten her umgreift. Am vorderen Enden des Trägers 12 ist die Öffnung 23 für die Rastnase 22 des Streifens 14 dargestellt.

Das in Fig. 6 dargestellte Antriebsrad 5 bildet mit der Schnecke 6 eine Baueinheit. Das Antriebsrad 5 ist als Reibrad ausgebildet und es weist auf seiner Unterseite im Bereich der Schnecke 6 eine Vertiefung 20 für das Schneckenrad 7 auf, um eine niedrige Bauhöhe des Schneckengetriebes zu erreichen.

**Patentansprüche**

1. Anordnung zum Reinigen eines Magnetkopfs (2) in einem Magnetbandgerät unter Verwendung einer mit einer Reinigungseinrichtung (4, 12) versehenen Kassette (1), die anstelle einer mit einem Magnetband versehenen Kassette in das Magnetbandgerät eingeführt wird und die eine durch eine Antriebsanordnung (3) des Magnetbandgeräts angetriebene Exzenteranordnung (8) enthält, die die Drehbewegung der Antriebsanordnung (3) in eine Bewegung eines Reinigungselements (4) der Reinigungseinrichtung relativ zum Magnetkopf (2) umsetzt, dadurch gekennzeichnet, daß ein von der Antriebsanordnung (3) des Magnetbandgeräts angetriebenes Schneckengetriebe (6, 7) vorgesehen ist, das die Exzenteranordnung (8) antreibt, deren Achse senkrecht zur Achse der Antriebsanordnung (3) angeordnet ist und daß die Exzenteranordnung (8) eine Exzenterwelle (11) aufweist, die die Drehbewegung der Antriebsanordnung (3) in eine Hin- und Herbewegung des Reinigungselements (4) relativ zum Magnetkopf (2) senkrecht zur Bewegungsrichtung des Magnetbands umsetzt.

2. Anordnung zum Reinigen eines Magnetkopfs (2) in einem Magnetbandgerät unter Verwendung einer mit einer Reinigungseinrichtung (4, 12) versehenen Kassette (1), die anstelle einer mit einem Magnetband versehenen Kassette in das Magnetbandgerät eingeführt wird und die eine durch eine Antriebsanordnung (3) des Magnetbandgeräts angetriebene Exzenteranordnung (8) enthält, die die Drehbewegung der Antriebsanordnung (3) in eine Bewegung eines Reinigungselements (4) der Reinigungseinrichtung relativ zum Magnetkopf (2) umsetzt, dadurch gekennzeichnet, daß ein von der Antriebsanordnung (3) des Magnetbandgeräts angetriebenes Schneckengetriebe (6, 7) vorgesehen ist, das die Exzenteranordnung (8) antreibt, deren Achse senkrecht zur Achse der Antriebsanordnung (3) angeordnet ist und daß die Exzenteranordnung (8) eine Exzenterwelle (11) aufweist, die die Drehbewegung der Antriebsanordnung (3) in eine Schwenkbewegung des Reinigungselements (4) relativ zum Magnetkopf (2) senkrecht zur Bewegungsrichtung des Magnetbands umsetzt.

3. Anordnung nach Anspruch 2, **dadurch gekennzeichnet**, daß die Exzenteranordnung (8) die Drehbewegung der Antriebsanordnung (3) zusätzlich in eine Hin- und Herbewegung des Reinigungselements (4) senkrecht zur Bewegungsrichtung eines Magnetbands umsetzt.

4. Anordnung nach einem der Ansprüche 1 bis 3, dadurch gekennzeichnet, daß die Exzenterwelle (11) über das Schneckengetriebe (6, 7) von einem von der Antriebsanordnung (3) des Magnetbandgeräts angetriebenen Antriebsrad (5) in Drehung versetzt wird und von einem mit dem Reinigungselement (4) versehenen Träger (12) mindestens teilweise umfaßt wird.

5. Anordnung nach einem der Ansprüche 2 bis 4, **dadurch gekennzeichnet**, daß die Exzenterwelle (11) der Exzenteranordnung (8) an einer Welle (10) angeordnet ist und zur Achse der Welle (10) geneigt ist.

6. Anordnung nach Anspruch 5, **dadurch gekennzeichnet**, daß die Enden der Exzenterwelle (11) gegenüber der Welle (10) um einen Winkel von ca. 60° gegeneinander verdreht sind.

7. Anordung nach Anspruch 4, **dadurch gekennzeichnet**, daß das Schneckengetriebe (6, 7) aus einer von dem Antriebsrad (5) angetriebenen Schnecke (6) und aus einem auf einer Welle (10) der Exzenteranordnung (8) angeordneten Schneckenrad (7) gebildet ist.

8. Anordnung nach Anspruch 7, **dadurch gekennzeichnet**, daß das Antriebsrad (5) mit der Schnecke (6) des Schneckengetriebes verbunden ist und eine Vertiefung (20) für das zugehörige Schneckenrad (7) aufweist.

9. Anordnung nach einem der Ansprüche 1 bis 8, **dadurch gekennzeichnet**, daß als Antriebsanordnung (3) des Magnetbandgeräts eine normalerweise ein Magnetband antreibende Bandantriebsrolle (3) vorgesehen ist.

10. Anordnung nach Anspruch 9, **dadurch gekennzeichnet**, daß das Antriebsrad (5) als von der Bandantriebsrolle (3) angetriebenes Reibrad ausgebildet ist.

11. Anordnung nach Anspruch 4, **dadurch gekennzeichnet**, daß die Lagerung des Trägers (12) unter Verwendung eines mit dem Träger (12) verbundenen kugelförmigen Teils (15) erfolgt, das auf einer mit der Kassette (1) verbundenen entsprechenden Kugelpfanne (16) aufliegt und daß der Träger (12) an seinem dem Reinigungselement (4) gegenüberliegenden Ende an der Kassette (1) gelagert ist.

12. Anordnung nach Anspruch 11, **dadurch gekennzeichnet**, daß ein Führungsstift (18) vorgesehen ist, der über eine entsprechende Ausnehmung (19) den Träger (12) während seiner Bewegung führt.

13. Anordnung nach einem der Ansprüche 1 bis 12, **dadurch gekennzeichnet**, daß das Reinigungselement (4) auf einem Streifen (14) auswechselbar angeordnet ist.

14. Anordnung nach einem der Ansprüche 1 bis 13, **dadurch gekennzeichnet**, daß die Kassette (1) in ihrem Deckel eine zusätzliche Öffnung zum Auswechseln des Reinigungselements (4) enthält.

## Claims

1. Arrangement for the cleaning of a magnetic head (2) in a magnetic tape apparatus, using a cassette (1) which is provided with a cleaning device (4, 12), is loaded into the magnetic tape apparatus instead of a cassette provided with a magnetic tape and contains an eccentric arrangement (8) which is driven by a drive arrangement (3) of the magnetic tape apparatus and converts the rotational movement of the drive arrangement (5) into a movement of a cleaning element (4) of the cleaning device relative to the magnetic head (2), characterized in that a worm gear (6, 7) is provided, which is driven by the drive arrangement (3) of the magnetic tape apparatus and drives the eccentric arrangement (8), the axis of which is arranged perpendicular to the axis of the drive arrangement (3), and in that the eccentric arrangement (8) has an eccentric shaft (11), which converts the rotational movement of the drive arrangement (3) into a to and fro movement of the cleaning element (4) relative to the magnetic head (2) perpendicular to the direction of movement of the magnetic tape.

2. Arrangement for the cleaning of a magnetic head (2) in a magnetic tape apparatus, using a cassette (1) which is provided with a cleaning device (4, 12), is loaded into the magnetic tape apparatus instead of a cassette provided with a magnetic tape and contains an eccentric arrangement (8) which is driven by a drive arrangement (3) of the magnetic tape apparatus and converts the rotational movement of the drive arrangement (3) into a movement of a cleaning element (4) of the cleaning device relative to the magnetic head (2), characterized in that a worm gear (6, 7) is provided, which is driven by the drive arrangement (3) of the magnetic tape apparatus and drives the eccentric arrangement (8), the axis of which is arranged perpendicular to the axis of the drive arrangement (3), and in that the eccentric arrangement (8) has an eccentric shaft (11), which converts the rotational movement of the drive arrangement (3) into a swivelling movement of the cleaning element (4) relative to the magnetic head (2) perpendicular to the direction of movement of the magnetic tape.

3. Arrangement according to Claim 2, characterized in that the eccentric arrangement (8) converts the rotational movement of the drive arrangement (3) additionally into a to and fro movement of the cleaning element (4) perpendicular to the direction of movement of a magnetic tape.

4. Arrangement according to one of Claims 1 to 3, characterized in that the eccentric shaft (11) is set in rotation via the worm gear (6, 7) by a drive wheel (5) driven by the drive arrangement (3) of the magnetic tape apparatus and is at least partially embraced by a carrier (12) provided with the cleaning element (4).

5. Arrangement according to one of Claims 2 to 4, characterized in that the eccentric shaft (11) of the eccentric arrangement (8) is arranged on a shaft (10) and is inclined with respect to the axis of the shaft (10).

6. Arrangement according to Claim 5, characterized in that the ends of the eccentric shaft (11) are mutually turned through an angle of about 60° with respect to the shift (10).

7. Arrangement according to Claim 4, characterized in that the worm gear (6, 7) is formed by a worm (6) driven by the drive wheel (5) and by a worm wheel (7) arranged on a shaft (10) of the eccentric arrangement (8).

8. Arrangement according to Claim 7, characterized in that the drive wheel (5) is connected to the worm (6) of the worm gear and has a depression (20) for the associated worm wheel (7).

9. Arrangement according to one of Claims 1 to 8, characterized in that a tape drive roller (3), normally driving a magnetic tape, is povided as drive arrangement (3) of the magnetic tape apparatus.

10. Arrangement according to Claim 9, characterized in that the drive wheel (5) is designed as friction wheel driven by the tape drive roller (3).

11. Arrangement according to Claim 4, characterized in that the mounting of the carrier (12) takes place using a spherical part (15) which is connected to the carrier (12) and rests on a corresponding ball socket (16), connected to the cassette (1), and in that the carrier (12) is mounted at its end opposite the cleaning element (4) on the cassette (1).

12. Arrangement according to Claim 11, characterized in that a guide pin (18) is provided, which guides the carrier (12) during its movement via a corresponding clearance (19).

13. Arrangement according to one of Claims 1 to 12, characterized in that the cleaning element (4) is exchangeably arranged on a strip (14).

14. Arrangement according to one of Claims 1 to 13, characterized in that the cassette (1) contains in its cover an additional opening for the exchanging of the cleaning element (4).

## Revendications

1. Dispositif pour nettoyer une tête magnétique (2) dans un appareil à bande magnétique, moyennant l'utilisation d'une cassette (1), qui comporte un dispositif de nettoyage (4, 12), qui est introduite, à la place d'une cassette comportant une bande magnétique, dans l'appareil à bande magnétique et qui contient un dispositif excentrique (8), qui est entraîné par un dispositif d'entraînement (3) de l'appareil à bande magnétique et convertit le mouvement de rotation du dispositif d'entraînement (3) en un déplacement d'un élément nettoyant (4) du dispositif de nettoyage par rapport à la tête magnétique (2), caractérisé par le fait qu'il est prévu un mécanisme à vis sans fin (6, 7), qui est entraîné par le dispositif d'entraînement (3) de l'appareil à bande magnétique et entraîne le dispositif excentrique (8), dont l'axe est perpendiculaire à l'axe du dispositif d'entraînement (3), et que le dispositif excentrique (8) possède un arbre d'excentrique (11), qui convertit le mouvement de rotation du dispositif d'entraînement (3) en un déplacement en va-et-vient de l'élément nettoyant (4) par rapport à la tête magnétique (2), perpendiculairement à la direction de déplacement de la bande magnétique.

2. Dispositif pour nettoyer une bande magnétique (2) dans un appareil à bande magnétique, moyennant l'utilisation d'une cassette (1), qui comporte un dispositif de nettoyage (4, 12), qui est introduite à la place d'une cassette comportant une bande magnétique, dans l'appareil à bande magnétique et qui contient un dispositif excentrique (8), qui est entraîné par un dispositif d'entraînement (3) de l'appareil à bande magnétique et convertit le mouvement de rotation du dispositif d'entraînement (3) en un déplacement d'un élément nettoyant (4) du dispositif de nettoyage par rapport à la tête magnétique (2), caractérisé par le fait qu'il est prévu un mécanisme à vis sans fin (6, 7), qui est entraîné par un dispositif d'entraînement (3) de l'appareil à bande magnétique et entraîne le dispositif excentrique (8), dont l'axe est perpendiculaire à l'axe du dispositif d'entraînement (3), et que le dispositif excentrique (8) comporte un arbre d'excentrique (11), qui convertit le mouvement de rotation du dispositif d'entraînement (3) en un mouvement de pivotement de l'élément nettoyant (4) par rapport à la tête magnétique (2), perpendiculairement à la direction de déplacement de la bande magnétique.

3. Dispositif suivant la revendication 2, caractérisé par le fait que le dispositif excentrique (8) convertit, en outre, le mouvement de rotation du dispositif d'entraînement (3) en un déplacement en va-et-vient de l'élément nettoyant (4), perpendiculairement à la direction de déplacement d'une bande magnétique.

4. Dispositif suivant l'une des revendications 1 à 3, caractérisé par le fait que l'arbre d'excentrique (11) est entraîné en rotation par l'intermédiaire du mécanisme à vis sans fin (6, 7) par une roue d'entraînement (5), qui est entraînée par le dispositif d'entraînement (3) de l'appareil à bande magnétique et est contenue au moins partiellement dans un support (12) équipé d'éléments nettoyants (4).

5. Dispositif suivant l'une des revendications 2 à 4, caractérisé par le fait que l'arbre d'excentrique (11) du dispositif excentrique (8) est monté sur un arbre (19) et est incliné par rapport à l'axe de l'arbre (10).

6. Dispositif suivant la revendication 5, caractérisé par le fait que les extrémités de l'arbre d'excentrique (11) sont décalées entre elles d'un angle d'environ 60°, par rapport à l'arbre (10).

7. Dispositif suivant la revendication 4, caractérisé par le fait que le mécanisme à vis sans fin (6, 7) est formé par une vis sans fin (6) entraînée par la roue d'entraînement (5), et par une roue à vis sans fin montée sur un arbre (10) du dispositif excentrique (8).

8. Dispositif suivant la revendication 7, caractérisé par le fait que la roue d'entraînement (5) est reliée à la vis sans fin (6) du mécanisme à vis sans fin et comporte un mécanisme sans fin (20) pour la roue à vis sans fin associée (5).

9. Dispositif suivant l'une des revendications 1 à 8, caractérisée par le fait qu'il est prévu, comme dispositif d'entraînement (3) de l'appareil à bande magnétique, un galet (3) d'entraînement de la bande, qui entraîne normalement une bande magnétique.

10. Dispositif suivant la revendication 9, caractérisé par le fait que la roue d'entraînement (5) est réalisée sous la forme d'un galet de friction entraîné par le galet (3) d'entraînement de la bande.

11. Dispositif suivant la revendication 4, caractérisé par le fait que le soutien du support (12) est réalisé moyennant l'utilisation d'une partie de forme sphérique (15), qui est relié au support (12) et repose sur un coussinet sphérique correspondant (16) relié à la cassette (1), et que le support (12) est supporté par la cassette (1), au niveau de son extrémité situé à l'opposé de l'élément nettoyant (4).

12. Dispositif suivant la revendication 11, caractérisé par le fait qu'il est prévu une tige de guidage (18), qui guide le support (12) pendant son déplacement, par l'intermédiaire d'un évidement correspondant (19).

13. Dispositif suivant l'une des revendications 1 à 12, caractérisé par le fait que l'élément nettoyant (4) est disposé, de manière à être interchangeable, sur une bande (14).

14. Dispositif suivant l'une des revendications 1 à 13, caractérisé par le fait que la cassette (1), contient, dans son couvercle, une ouverture additionnelle permettant de remplacer l'élément nettoyant (4).

FIG 1

# FIG 2

# FIG 3

# FIG 4

# FIG 5

# FIG 6